# EUROPÄISCHE PATENTSCHRIFT

(11) **EP 0 765 564 B1**
(45) Veröffentlichungstag und Bekanntmachung des Hinweises auf die Patenterteilung: **06.09.2000**
(21) Anmeldenummer: 95920771.3
(22) Anmeldetag: 08.06.1995
(51) Int. Cl.: H04M 1/72, H04Q 9/00, H04M 11/00

(54) **FERNSTEUERUNGSANORDNUNG FÜR ELEKTRISCHE GERÄTE**
REMOTE CONTROL SYSTEM FOR ELECTRICAL DEVICES
SYSTEME DE COMMANDE A DISTANCE POUR APPAREILS ELECTRIQUES

(30) Priorität: 17.06.1994 DE 4421307
(43) Veröffentlichungstag der Anmeldung: 02.04.1997
(73) Patentinhaber: SIEMENS AKTIENGESELLSCHAFT, 80333 München (DE)
(72) Erfinder: BIEDERMANN, Rolf, D-46499 Hamminkeln (DE); BECKERS, Michael, D-46395 Bocholt (DE)
(86) Internationale Anmeldenummer: DE9500748
(87) Internationale Veröffentlichungsnummer: WO9535618

(56) Entgegenhaltungen:
- WO-A-86/06890
- WO-A-91/13523
- WO-A-92/20167
- WO-A-94/01963
- WO-A-94/13092
- DE-A- 4 209 742
- DE-A- 4 216 509
- DE-U- 9 112 010
- GB-A- 2 092 347
- JP-A- 4 266 294
- US-A- 4 508 935
- US-A- 5 138 649
- US-A- 5 327 483

## Beschreibung

Fernsteuerungsanordnungen für elektrische Geräte sind in vielfältiger Form bekannt. So sind beispielsweise Geräte auf dem Konsumelektronik-Markt, wie z. B. Fernsehgeräte, Videorecorder, HiFi-Anlagen, Haushaltsgeräte, Garagentore, Jalousien und Markisen etc., fernsteuerbar. Die Fernsteuerung des Gerätes erfolgt in bekannter Weise mittels Tastendruck an der fernsteuernden Anordnung und über eine dem Gerät unmittelbar zugeordnete RC-Einrichtung, der sogenannten Remote Control-Box. Die Fernsteuerung ist dabei beispielsweise als Infrarot- oder Ultraschallfernsteuerung ausgebildet.

Andererseits sind aber auch Fernsteuerungsanordnungen für elektrische Geräte, wie z.B. Telefone mit integriertem Anrufbeantworter, bekannt, die gemäß der DE-A1-34 28 887 durch das Betätigen von Tasten an einem Autotelefon oder gemäß der nachveröffentlichten deutschen Patentanmeldung DE 43 26 826 A1 durch die sprachbezogene Eingabe von Codewörtern fernsteuerbar sind.

Desweiteren sind Schnurlostelefone nach dem DECT-Standard (Digital European Cordless Telecommunication; vgl. European Telecommunication Standard; prETS 300 175-1...9, 10/1992, Teile 1 bis 9; ETS-Institute 06921 Sophia Antipolis, France) mit einer Basisstation (Fixed Termination) und mindestens einem Mobilteil (Portable Termination) und zellulare Mobilfunktelefone nach dem GSM-Standard (Groupe Spéciale Mobile oder Global Systems for Mobile Communication) bekannt [vgl. **(1)** Philips Telecommunication Review: "DECT, a universal cordless access system"; Vol.49, No.3, 09/1991, Seiten 68 bis 73; **(2)** Nachrichtentechnik Elektronik 42 (Jan./Feb. 1992), No.1, Berlin; U. Pilger: "Struktur des DECT-Standards"; Seiten 23 bis 29; **(3)** Informatik Spektrum 14 (Jun. 1991), No.3, Berlin; A. Mann: "Der GSM-Standard - Grundlage für digitale europäische Mobilfunknetze"; Seiten 137 bis 152;].

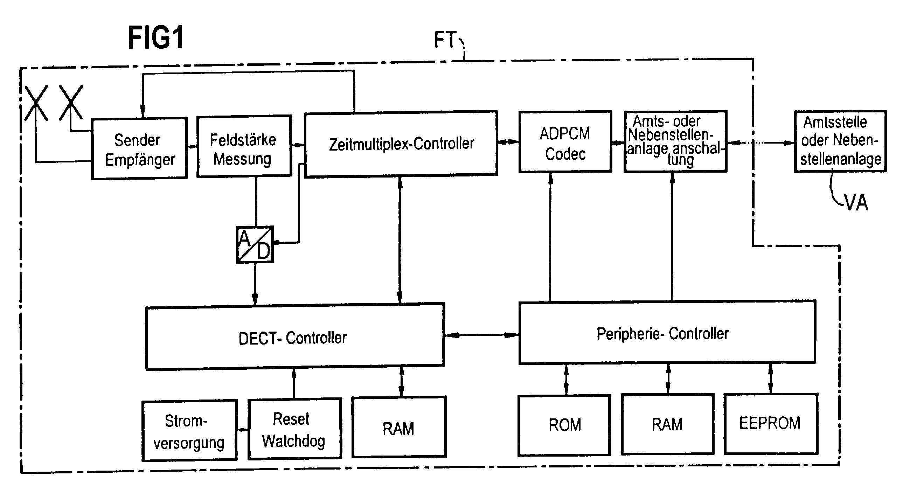

Figur 1 zeigt den prinzipiellen Aufbau einer DECT-spezifischen Schnurlos-Basisstation FT (Fixed Termination), die an eine Vermittlungsanlage VA (Amtsstelle oder Nebenstellenanlage) angeschlossen ist. Schnurlos-Basisstationen mit einem solchen Aufbau sind unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwerth - 1993 auf dem Markt eingeführt worden. Dieser Aufbau ist im wesentlichen auch aus der DE-Z: Funkschau 10/1993; Seiten 74 bis 77; Titel: "Digital kommunizieren mit DECT - DECT-Chipsatz von Philips"; Autor: Dr. J. Nieder und der WO 94/10812 (Figur 1 mit der dazugehörigen Beschreibung) vorbekannt.

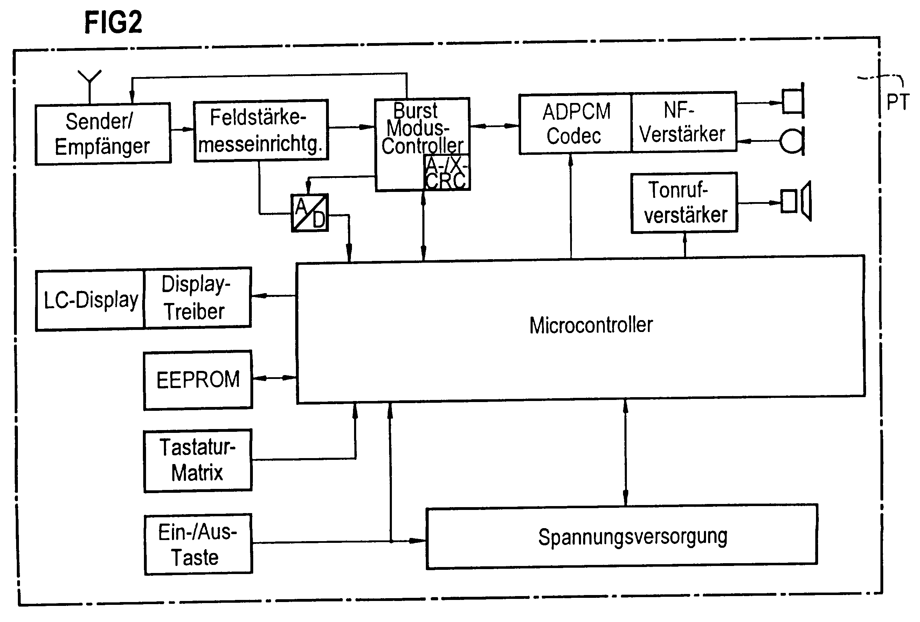

Figur 2 zeigt den prinzipiellen Aufbau eines DECT-spezifischen Schnurlos-Mobilteils PT. Schnurlos-Mobilteile mit einem solchen Aufbau sind ebenfalls unter der Produktbezeichnung "Gigaset 952" - vgl. DE-Z: Funkschau 12/1993, Seiten 24 und 25; "Digitale Freiheit - Gigaset 952: Das erste DECT-Telefon"; Autor: G. Weckwerth - 1993 auf dem Markt eingeführt worden. Dieser Aufbau ist im wesentlichen auch aus der DE-Z: Funkschau 10/1993; Seiten 74 bis 77; Titel: "Digital kommunizieren mit DECT - DECT-Chipsatz von Philips"; Autor: Dr. J. Nieder und der WO 94/10812 (Figur 1 mit der dazugehörigen Beschreibung) vorbekannt.

Aus der DE-42 09 742 A1 ist eine Fernsteuerungsanordnung für schwer zugängliche und steuerbare Maschinen bzw. Vorrichtungen bekannt, bei der zur Fernsteuerung der Maschinen bzw. Vorrichtungen
1) Steuerungsinformationen von einem über das normale (leitungsgebundene) Telefonnetz angesteuerten Funksendesystem (drahtlose Sendeeinrichtung) an ein Personenrufgerät (Pager; drahtlose Empfangseinrichtung) übertragen werden,
2) das Personenrufgerät z.B. Leuchtdioden aufweist und in einer Halterung eines der Maschine bzw. der Vorrichtung zugeordneten Steuermechanismus eingeschoben ist,
3) das Personenrufgerät in der Halterung derart angeordnet ist, daß die Leuchtdioden sich in einer definierten Lage zu in dem Steuermechanismus vorgesehenen Fototransistoren befinden,
4) der durch die Übertragung der Steuerungsinformation gewünschte Steuerzustand der Maschine bzw. Vorrichtung durch die unterschiedliche Blinkfolge der Leuchtdioden angezeigt und von den Fototransistoren und einer diesen nachgeschalteten Auswerteschaltung erkannt wird.

Aus der DE-42 16 509 A1 ist weiterhin ein Schnurlostelefon bekannt, das ein an das Strom- und Telefonnetz angeschlossenes Festteil und ein Mobilteil enthält und das zum drahtlosen Betrieb von Zusatzeinrichtungen - wie z. B. Faksimilegeräte, Modem`s, Fernschalt- und Fernwirkeinrichtungen etc. - in dem Mobilteil eine Anschaltemöglichkeit aufweist und somit als schnurlose TAE-Steckdose ausgebildet ist.

Aus der JP-04-287 462 A bzw. der US-5,327,483 ist eine Fernsteuerungsanordnung für elektrische Geräte bekannt, bei dem an einem Schnurlos-Mobilteil eingebbare Fernsteuerungsbefehle über eine Schnurlos-Basisstation und ein Datenbussystem an eine als "Home bus" ausgebildete Fernsteuerungseinrichtung zur Fernsteuerung von elektrischen Geräten übertragen werden.

Aus der JP-04-266 294 A ist eine Fernsteuerungsanordnung für elektrische Geräte bekannt, bei der an einer Schnurlos-Basisstation eingebbare Fernsteuerungsbefehle zur Fernsteuerung von elektrischen Geräten über eine Funkschnittstelle zu einem Schnurlos-Mobilteil mit einer Infrarot-Fernsteuerungsschnittstelle und anschließend über die Infrarot-Fernsteuerungsschnittstelle zu einer Infrarot-Fernsteuerungseinrichtung in den elektrischen Geräten übertragen werden.

Aus der US-A-4 508 935 ist eine Fernsteuerungsanordnung für elektrische Geräte bekannt, bei der aufgrund einer Tastenbetätigung an einem Schnurlos-Mobilteil erzeugte Wahlimpulse über eine optische Schnittstelle einer Schnurlos-Basisstation an ein elektrisches Gerät übertragen werden.

Die der Erfindung zugrundeliegende Aufgabe besteht darin, eine Fernsteuerungsanordnung für elektrische Geräte anzugeben, die multifunktionell ausgebildet (z. B. Verwendung zur Sprachübertragung und zur Fernsteuerung elektrischer Geräte etc.) und zudem universell einsetzbar ist.

Diese Aufgabe wird durch die Merkmale der Patentansprüche 1 und 2 gelöst.

Die erfindungsgemäße Fernsteuerungsanordnung weist - allgemein formuliert - eine schnurlose Sende-/Empfangseinrichtung (z. B. ein Schnurlostelefon nach den Ansprüchen 1 oder 2), eine dem elektrischen Gerät zugeordnete Fernsteuerungseinrichtung, eine Fernsteuerungsschnittstelle, die zur Fernsteuerung des elektrischen Gerätes mit der schnurlosen Sende/Empfangseinrichtung und der Fernsteuerungseinrichtung verbunden ist und Steuerungsmittel, die der schnurlosen Sende/Empfangseinrichtung zugeordnet sind, auf.

Dadurch ist es möglich, daß durch die Steuerungsmittel initialisierte Fernsteuerungsnachrichten, die die Fernsteuerungsschnittstelle logisch öffnen und schließen, die Fernsteuerungsschnittstelle im geöffneten Zustand in der Fernsteuerungsnachricht enthaltene Fernsteuerungsbefehle an die Fernsteuerungseinrichtung ausgibt.

Mit der Verwendung der schnurlosen Sende-/Empfangseinrichtung als fernsteuernde Einheit für fernzusteuernde elektrische Geräte, z. B. Konsumgeräte (Haus-, Heim-, Garten- und private Fortbewegungsgeräte etc.) ist somit eine universelle - bezüglich der fernzusteuernden Geräte - Fernsteuerungsanordnung angegeben, die weiterhin als Telekommunikationssystem verwendbar ist (multifunktionale Ausbildung der Fernsteuerungsanordnung).

Zur Fernsteuerung der elektrischen Geräte weist die schnurlose Sende-/Empfangseinrichtung nach den Ansprüchen 5 und 6 eine digitale Fernsteuerungsschnittstelle (z. B. eine V.24-Schnittstelle, einen I²C-Bus, etc.) auf, die einer dem elektrischen Gerät zugeordneten Fernsteuerungseinrichtung zugeordnet ist. Die Fernsteuerungsverbindung zwischen der Fernsteuerungsschnittstelle des Schnurlostelefons und der Fernsteuerungseinrichtung ist dabei gemäß Anspruch 1 drahtgebunden. Die Verwendung eines Schnurlostelefons als fernsteuernde Einheit für die elektrischen Geräte gemäß den Ansprüchen 1 bis 4 weist gegenüber anderen drahtlosen Sende-/Empfangseinrichtungen, z. B. Mobilfunkgeräten in zellularen Mobilfunknetzen, den Vorteil auf, daß keine Netzbenutzungsgebühren für die Fernsteuerung der elektrischen Geräte zu entrichten sind.

Weitere vorteilhafte Weiterbildungen der Erfindung sind in den Unteransprüchen angegeben.

Drei Ausführungsbeispiele der Erfindung werden anhand der Figuren 3 bis 5 erläutert. Es zeigen:
Figur 3 eine erste Fernsteuerungsanordnung bestehend aus einem ersten fernsteuernden Schnurlostelefon (Basisstation und Mobilteil) und einer ersten dem ferngesteuerten Gerät zugeordneten RC-Einrichtung (Remote Control-Einrichtung oder Remote Control-Box),
Figur 4 eine zweite Fernsteuerungsanordnung bestehend aus einem zweiten fernsteuernden Schnurlostelefon (Basisstation und zwei Mobilteile) und einer zweiten dem ferngesteuerten Gerät zugeordneten RC-Einrichtung (Remote Control-Einrichtung oder Remote Control-Box),
Figur 5 eine Fernsteuerungsanordnung bestehend aus einem fernsteuernden Schnurlosmobilteil und einer dem ferngesteuerten Gerät zugeordneten RC-Schnurlosbasisstation (Remote Control-Schnurlosbasisstation oder Remote Control-Box).

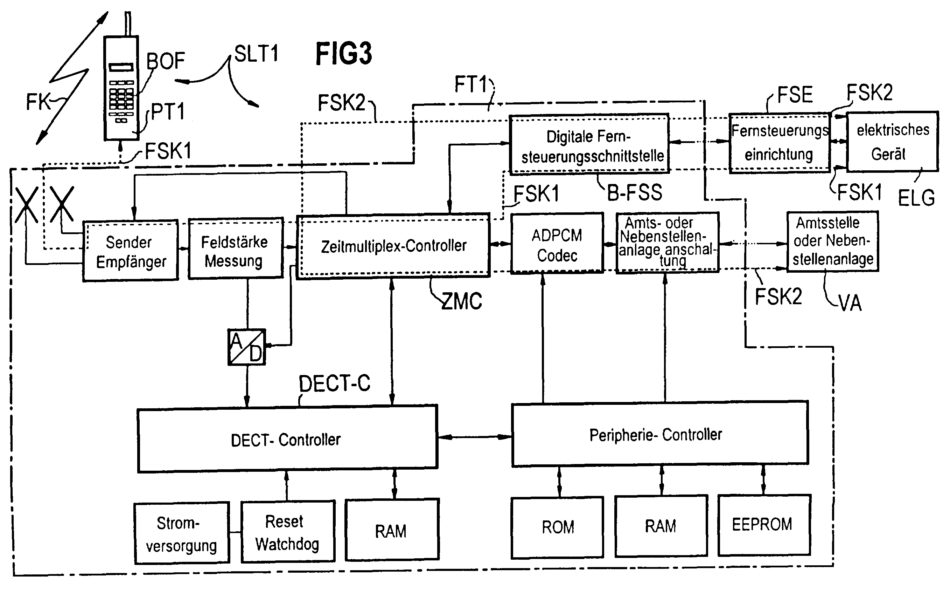

Figur 3 zeigt ausgehend von den Figuren 1 und 2 ein erstes DECT-Schnurlostelefon SLT1 mit einer ersten Basisstation FT1 und einem ersten Mobilteil PT1, das zur Fernsteuerung von elektrischen Geräten ELG, z. B. Konsumgeräte (Haus-, Heim-, Garten- und private Fortbewegungsgeräte etc.), mit einer Fernsteuerungseinrichtung FSE (Remote Control-Einrichtung oder RC-Einrichtung) verbunden ist. Für die Fernsteuerung des elektrischen Gerätes ELG wird die Basiskonfiguration des DECT-Schnurlostelefons SLT1 gemäß Figur 1, wie sie für die Schnurlos-Telekommunikation nach dem DECT-Standard vorgesehen ist, zugrundegelegt.

Am Anfang der Fernsteuerungskette steht dabei das Mobilteil PT1. Von diesem Mobilteil PT1 gelangen im folgenden noch näher zu definierende Fernsteuerungsnachrichten über einen Funkkanal FK zur Basisstation FT1. In der Basisstation FT1 wird die empfangene Fernsteuerungsnachricht unter der Steuerungshoheit eines DECT-Controllers DECT-C zunächst einem Zeitmultiplex-Controller ZMC und anschließend einer digitalen basisstationsindividuellen Fernsteuerungsschnittstelle B-FSS zugeführt. Von dieser Fernsteuerungsschnittstelle B-FSS wird die Fernsteuerungsnachricht abschließend an eine geräteindividuelle Fernsteuerungseinrichtung FSE abgegeben. Die Fernsteuerungsschnittstelle B-FSS ist dabei beispielsweise als V.24-Schnittstelle oder als I²C-Bus ausgebildet. Das Mobilteil PT1, der Funkkanal FK, die Basisstation FT1 mit dem Zeitmultiplex-Controller ZMC und der digitalen Fernsteuerungsschnittstelle B-FSS und die geräteindividuelle Fernsteuerungseinrichtung FSE bilden dabei einen ersten Fernsteuerungskanal FSK1.

Die Fernsteuerungsnachricht enthält gerätespezifische Fernsteuerungsinformationen, die von der Fernsteuerungseinrichtung FSE zur Fernsteuerung des elektrischen Gerätes ELG ausgewertet und verarbeitet werden. Um auf den vorstehend beschriebenen Fernsteuerungskanal FSK1 von dem Mobilteil PT1 zu dem elektrischen Gerät ELG die beschriebenen Fernsteuerungsnachrichten überhaupt übertragen zu können, muß dieser Fernsteuerungskanal FSK1 zunächst aktiviert werden. Diese Aktivierung des Fernsteuerungskanals FSK1 wird durch eine Bedienoberflächenprozedur (BOF-Prozedur) an dem Mobilteil PT1 vorgenommen. Die Bedienoberflächenprozedur besteht im vorliegenden Fall aus einer Kombination von zu drückenden Tasten an dem Mobilteil PT1. Alternativ ist es auch möglich die Bedienoberflächenprozedur sprachbezogen durchzuführen.

Durch die Bedienoberflächenprozedur wird zunächst die Fernsteuerungsschnittstelle B-FSS angesprochen. Je nachdem, ob es sich bei der Bedienoberflächenprozedur um eine Startprozedur oder eine Abschlußprozedur handelt, wird die digitale Fernsteuerungsschnittstelle FSS logisch geöffnet bzw. geschlossen. Erst wenn die digitale Fernsteuerungsschnittstelle FSS in der Basisstation FT1 geöffnet ist, kann die eigentliche Fernsteuerung des elektrischen Gerätes ELG über den beschriebenen Fernsteuerungskanal FSK1 beginnen.

Dies geschieht wiederum mit der Bedienoberfläche BOF des Mobilteils PT1. Dazu werden beispielsweise mehrere Tasten in einer vorgegebenen Reihenfolge betätigt. Aus diesem definierten Betätigen der Tasten resultiert ein Fernsteuerungsbefehl, der über den Funkkanal FK, den Zeitmultiplex-Controller ZMC und die geöffnete digitale Fernsteuerungsschnittstelle B-FSS letztlich zu der geräteindividuellen Fernsteuerungseinrichtung FSE gelangt. In der Fernsteuerungseinrichtung wird der empfangene Fernsteuerungsbefehl interpretiert und das elektrische Gerät ELG entsprechend dem Fernsteuerungsbefehl ferngesteuert. Das Übertragen des Fernsteuerungsbefehls von der digitalen Fernsteuerungsschnittstelle B-FSS zu der Fernsteuerungseinrichtung FSE geschieht sinngemäß dadurch, daß die an dem Mobilteil PT1 betätigten Fernsteuerungstasten im geöffneten Zustand der Fernsteuerungsschnittstelle B-FSS transparent übertragen werden. Die transparente Übertragung der Fernsteuerungstasten bzw. des Fernsteuerungsbefehls wird auch als Fernsteuerungsmeldung bezeichnet.

Der Fernsteuerungskanal FSK1 ist weiterhin derart ausgebildet, daß auf die von dem Mobilteil PT1 zu dem elektrischen Gerät ELG übertragene Fernsteuerungsmeldung von dem elektrischen Gerät zu dem Mobilteil PT1 eine Rückmeldung übertragen werden kann. Die mit dieser Rückmeldung übertragenen Informationen (Daten) können dabei an dem Mobilteil PT1 optisch oder akustisch angezeigt werden (Display oder Hörkapsel). So enthält die Rückmeldung beispielsweise Störungs- oder Fehlermeldungen, durch die dem Benutzer an dem Mobilteil PT1 mitgeteilt wird, daß eine Fernsteuerung des elektrischen Gerätes ELG momentan unmöglich ist. Durch das Fernsteuerungsmeldungs- und Rückmeldungs-Prinzip ist eine bedienerfreundliche, in sich geschlossene Fernsteuerungsanordnung vorhanden. Die Universalität der Fernsteuerung in bezug auf die Fernsteuerung verschiedenartiger elektrischer Geräte ergibt sich aus der Verwendung unterschiedlicher Fernsteuerungseinrichtungen FSE, die an die digitale Fernsteuerungsschnittstelle B-FSS anschließbar sind.

Alternativ zu dem vorstehend beschriebenen Fernsteuerungskanal FSK1 zwischen dem Mobilteil PT1 und dem elektrischen Gerät ist es aufgrund der Basiskonfiguration des DECT-Schnurlostelefons SLT1 gemäß Figur 1, wie sie für die Schnurlos-Telekommunikation nach dem DECT-Standard vorgesehen ist, auch möglich, einen weiteren zweiten Fernsteuerungskanal FSK2 von der Vermittlungsanlage VA über den Zeitmultiplex-Controller ZMC, der digitalen Fernsteuerungsschnittstelle B-FSS und der Fernsteuerungseinrichtung FSE zum elektrischen Gerät ELG zu verwenden. Dies kann beispielsweise durch eine DTMF-Einrichtung (Dual Tone Multi-Frequency = Mehrfrequenzwahlverfahren), wie sie z.B. für die Fernabfrage eines Anrufbeantworters benutzt wird, erfolgen. Durch diese Art der Fernsteuerung kann insbesondere die Reichweite der Fernsteuerung beliebig erhöht werden.

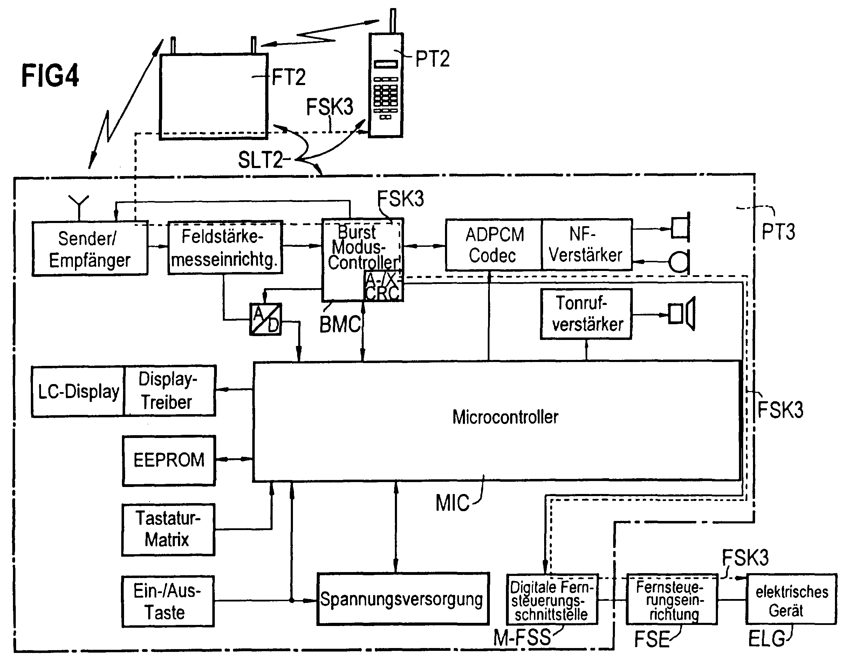

Figur 4 zeigt ausgehend von den Figuren 1 und 2 ein zweites DECT-Schnurlostelefon SLT2 mit einer zweiten Basisstation FT2, einem zweiten Mobilteil PT2 und einem dritten Mobilteil PT3, das zur Fernsteuerung des elektrischen Gerätes ELG mit der Fernsteuerungseinrichtung FSE verbunden ist. Für die Fernsteuerung des elektrischen Gerätes ELG wird wiederum die Basiskonfiguration des DECT-Schnurlostelefons SLT2 gemäß Figur 1, wie sie für die Schnurlos-Telekommunikation nach dem DECT-Standard vorgesehen ist, zugrundegelegt.

Am Anfang der Fernsteuerungskette steht im vorliegenden Ausführungsbeispiel das zweite Mobilteil PT2. Von diesem Mobilteil PT2 gelangen die Fernsteuerungsnachrichten über den Funkkanal FK zur zweiten Basisstation FT2, von wo sie anschließend wieder über den Funkkanal FK an das dritte Mobilteil PT3 abgegeben werden. In dem dritten Mobilteil PT3 wird die empfangene Fernsteuerungsnachricht unter der Steuerungshoheit eines Mikro-Controllers MIC zunächst einem Burst Modus-Controller BMC und anschließend einer digitalen mobilteilindividuellen Fernsteuerungsschnittstelle M-FSS zugeführt. Von dieser Fernsteuerungsschnittstelle M-FSS wird die Fernsteuerungsnachricht abschließend an die geräteindividuelle Fernsteuerungseinrichtung FSE abgegeben. Die Fernsteuerungsschnittstelle M-FSS ist dabei - analog zu der Fernsteuerungsschnittstelle B-FSS - beispielsweise als V.24-Schnittstelle oder als I²C-Bus ausgebildet. Das zweite Mobilteil PT2, der Funkkanal FK, die zweite Basisstation FT2, das dritte Mobilteil PT3 mit dem Sub-Controller BMC und der digitalen Fernsteuerungsschnittstelle M-FSS und die geräteindividuelle Fernsteuerungseinrichtung FSE bilden dabei einen dritten Fernsteuerungskanal FSK3.

Die Fernsteuerungsnachricht enthält gerätespezifische Fernsteuerungsinformationen, die von der Fernsteuerungseinrichtung FSE zur Fernsteuerung des elektrischen Gerätes ELG ausgewertet und verarbeitet werden. Um auf den vorstehend beschriebenen Fernsteuerungskanal FSK3 von dem zweiten Mobilteil PT2 zu dem elektrischen Gerät ELG die beschriebenen Fernsteuerungsnachrichten überhaupt übertragen zu können, muß dieser Fernsteuerungskanal FSK3 wiederum zunächst aktiviert werden. Diese Aktivierung des Fernsteuerungskanals FSK3 wird durch eine Bedienoberflächenprozedur (BOF-Prozedur) an dem zweiten Mobilteil PT2 vorgenommen. Die Bedienoberflächenprozedur besteht im vorliegenden Fall aus einer Kombination von zu drückenden Tasten an dem Mobilteil PT2, mit der gezielt das dritte Mobilteil PT3 über die zweite Basisstation FT2 adressiert wird. Alternativ ist es auch möglich, diese Bedienoberflächenprozedur sprachbezogen durchzuführen.

Durch die Bedienoberflächenprozedur wird zunächst die Fernsteuerungsschnittstelle M-FSS in dem dritten Mobilteil PT3 angesprochen. Je nachdem, ob es sich bei der Bedienoberflächenprozedur um eine Startprozedur oder eine Abschlußprozedur handelt, wird die digitale Fernsteuerungsschnittstelle M-FSS logisch geöffnet bzw. geschlossen. Erst wenn die digitale Fernsteuerungsschnittstelle M-FSS in dem Mobilteil PT3 geöffnet ist, kann die eigentliche Fernsteuerung des elektrischen Gerätes ELG über den beschriebenen Fernsteuerungskanal FSK3 beginnen.

Dies geschieht abermals mit der Bedienoberfläche BOF des Mobilteils PT2. Dazu werden beispielsweise mehrere Tasten in einer vorgegebenen Reihenfolge betätigt. Aus diesem definierten Betätigen der Tasten resultiert ein Fernsteuerungsbefehl, der über den Funkkanal FK, die zweite Basisstation FT2, den Burst Modus-Controller BMC und die geöffnete digitale Fernsteuerungsschnittstelle M-FSS letztlich zu der geräteindividuellen Fernsteuerungseinrichtung FSE gelangt. In der Fernsteuerungseinrichtung FSE wird der empfangene Fernsteuerungsbefehl interpretiert und das elektrische Gerät ELG entsprechend dem Fernsteuerungsbefehl ferngesteuert. Das Übertragen des Fernsteuerungsbefehls von der digitalen Fernsteuerungsschnittstelle M-FSS zu der Fernsteuerungseinrichtung FSE geschieht sinngemäß dadurch, daß die an dem Mobilteil PT2 betätigten Fernsteuerungstasten im geöffneten Zustand der Fernsteuerungsschnittstelle M-FSS transparent übertragen werden. Die transparente Übertragung der Fernsteuerungstasten bzw. des Fernsteuerungsbefehls wird wiederum als Fernsteuerungsmeldung bezeichnet.

Der Fernsteuerungskanal FSK3 ist weiterhin derart ausgebildet, daß auf die von dem Mobilteil PT2 zu dem elektrischen Gerät ELG übertragene Fernsteuerungsmeldung von dem elektrischen Gerät zu dem Mobilteil PT2 eine Rückmeldung übertragen werden kann. Die mit dieser Rückmeldung übertragenen Informationen (Daten) können dabei an dem Mobilteil PT2 optisch oder akustisch angezeigt werden (Display oder Hörkapsel). So enthält die Rückmeldung beispielsweise Störungs- oder Fehlermeldungen, durch die dem Benutzer an dem Mobilteil PT2 mitgeteilt wird, daß eine Fernsteuerung des elektrischen Gerätes ELG momentan unmöglich ist. Durch das Fernsteuerungsmeldungs- und Rückmeldungs-Prinzip ist eine bedienerfreundliche, in sich geschlossene Fernsteuerungsanordnung vorhanden. Die Universalität der Fernsteuerung in bezug auf die Fernsteuerung verschiedenartiger elektrischer Geräte ergibt sich aus der Verwendung unterschiedlicher Fernsteuerungseinrichtungen FSE, die an die digitale Fernsteuerungsschnittstelle FSS anschließbar sind.

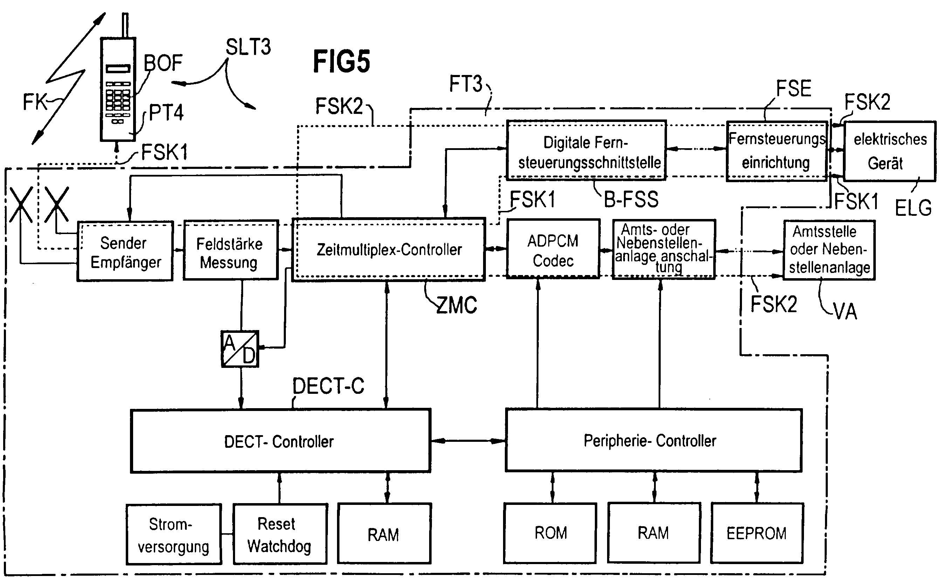

Figur 5 zeigt ausgehend von den Figuren 1 und 2 ein drittes DECT-Schnurlostelefon SLT3 mit einer dritten Basisstation FT3 und einem vierten Mobilteil PT4, das zur Fernsteuerung des elektrischen Gerätes ELG über die Fernsteuerungseinrichtung FSE mit dem elektrischen Gerät ELG verbunden ist. Für die Fernsteuerung des elektrischen Gerätes ELG wird wiederum die Basiskonfiguration des DECT-Schnurlostelefons SLT3 gemäß Figur 1, wie sie für die Schnurlos-Telekommunikation nach dem DECT-Standard vorgesehen ist, zugrundegelegt. Der Unterschied zwischen dem zur Fernsteuerung des elektrischen Gerätes ELG vorgesehenen ersten DECT-Schnurlostelefon SLT1 (Figur 3) und dem dritten DECT-Schnurlostelefon SLT3 (Figur 5) besteht darin, daß die Basisstation FT3 im Vergleich zur Basisstation FT1 mit der Fernsteuerungseinrichtung FSE eine Funktionseinheit derart bildet, daß die Basisstation FT3 in die Fernsteuerungseinrichtung FSE oder umgekehrt integriert ist.

## Patentansprüche

1. Fernsteuerungsanordnung für elektrische Geräte, mit:
a) einem ersten Schnurlos-Mobilteil (PT1, PT4) und einer ersten Schnurlos-Basisstation (FT1, FT3) eines ersten Schnurlostelefons (SLT1, SLT3) sowie einer dem elektrischen Gerät (ELG) und der Schnurlos-Basisstation (FT1, FT3) zugeordneten Fernsteuerungseinrichtung (FSE), wobei das Schnurlos-Mobilteil (PT1, PT4) mit der Schnurlos-Basisstation (FT1, FT3) durch bidirektionale Funk-Telekommunikation verbunden ist,
b) einer ersten digitalen seriellen Fernsteuerungsschnittstelle (B-FSS), die zur Fernsteuerung des elektrischen Gerätes (ELG) mit der Schnurlos-Basisstation (FT1, FT3) und der Fernsteuerungseinrichtung (FSE) verbunden ist,
c) Steuerungsmitteln (BOF), die das Schnurlos-Mobilteil (PT1, PT4) aufweist,
d) durch die Steuerungsmittel (BOF) initialisierte Fernsteuerungsnachrichten, die die Fernsteuerungsschnittstelle (B-FSS) logisch öffnen und schließen, so daß die Fernsteuerungsschnittstelle (B-FSS) im geöffneten Zustand in der Fernsteuerungsnachricht enthaltene Fernsteuerungsbefehle an die Fernsteuerungseinrichtung (FSE) ausgibt.

2. Fernsteuerungsanordnung für elektrische Geräte, mit:
a) einem zweiten Schnurlos-Mobilteil (PT2), einem dritten Schnurlos-Mobilteil (PT3) und einer zweiten Schnurlos-Basisstation (FT2) eines zweiten Schnurlostelefons (SLT2) sowie einer dem elektrischen Gerät (ELG) und dem dritten Schnurlos-Mobilteil (PT3) zugeordneten Fernsteuerungseinrichtung (FSE), wobei das zweite Schnurlos-Mobilteil (PT2) über die Schnurlos-Basisstation (FT2) mit dem dritten Schnurlos-Mobilteil (PT3) durch bidirektionale Funk-Telekommunikation verbunden ist,
b) einer zweiten Fernsteuerungsschnittstelle (M-FSS), die zur Fernsteuerung des elektrischen Gerätes (ELG) mit dem dritten Schnurlos-Mobilteil (PT3) und der Fernsteuerungseinrichtung (FSE) verbunden ist,
c) Steuerungsmitteln (BOF), die das zweite Schnurlos-Mobilteil (PT2) aufweist,
d) durch die Steuerungsmittel (BOF) initialisierten Fernsteuerungsnachrichten, die die Fernsteuerungsschnittstelle (M-FSS) logisch öffnen und schließen, so daß die Fernsteuerungsschnittstelle (M-FSS) im geöffneten Zustand in der Fernsteuerungsnachricht enthaltene Fernsteuerungsbefehle an die Fernsteuerungseinrichtung (FSE) ausgibt.

3. Fernsteuerungsanordnung nach Anspruch 1, **dadurch gekennzeichnet,** daß
die Fernsteuerungseinrichtung (FSE) und die erste Schnurlos-Basisstation (FT3) eine Funktionseinheit derart bilden, daß die Fernsteuerungseinrichtung (FSE) in der Schnurlos-Basisstation (FT3) oder die Schnurlos-Basisstation (FT3) in der Fernsteuerungseinrichtung (FSE) integriert ist.

4. Fernsteuerungsanordnung nach einem der Ansprüche 1 bis 3, **dadurch gekennzeichnet,** daß
das erste Schnurlostelefon (SLT1) bzw. das zweite Schnurlostelefon (SLT2) als DECT-Schnurlostelefon ausgebildet ist.

5. Fernsteuerungsanordnung nach einem der Ansprüche 1 bis 4, **dadurch gekennzeichnet,** daß die Fernsteuerungsschnittstelle (B-FSS, M-FSS) als V.24-Schnittstelle ausgebildet ist.

6. Fernsteuerungsanordnung nach einem der Ansprüche 1 bis 4, **dadurch gekennzeichnet,** daß die Fernsteuerungsschnittstelle (B-FSS, M-FSS) als I²C-Bus ausgebildet ist.

7. Fernsteuerungsanordnung nach einem der Ansprüche 1 bis 6, **dadurch gekennzeichnet,** daß die Fernsteuerungsschnittstelle (B-FSS, M-FSS) und die Fernsteuerungseinrichtung (FSE) derart ausgebildet sind, daß auf eine die Ausgabe des Fernsteuerungsbefehls repräsentierende Fernsteuerungsmeldung eine an dem ersten Schnurlos-Mobilteil (PT1, PT4) oder der ersten Schnurlos-Basisstation (FT1, FT3) bzw. dem zweiten Schnurlos-Mobilteil (PT2) oder der zweiten Schnurlos-Basisstation (FT2) anzeigbare Rückmeldung übertragbar ist.

8. Fernsteuerungsanordnung nach einem der Ansprüche 1 bis 7, **dadurch gekennzeichnet,** daß die Steuerungsmittel (BOF) als Bedienoberfläche ausgebildet sind.

9. Fernsteuerungsanordnung nach einem der Ansprüche 1 bis 8, **dadurch gekennzeichnet,** daß das elektrische Gerät (ELG) als Vorrichtung zum Öffnen oder Schließen eines Garagentores ausgebildet ist.

10. Fernsteuerungsanordnung nach einem der Ansprüche 1 bis 8, **dadurch gekennzeichnet,** daß das elektrische Gerät (ELG) als Vorrichtung zur Lichtsteuerung ausgebildet ist.

11. Fernsteuerungsanordnung nach einem der Ansprüche 1 bis 8, **dadurch gekennzeichnet,** daß das elektrische Gerät (ELG) als Vorrichtung zur Heizungssteuerung ausgebildet ist.

12. Fernsteuerungsanordnung nach einem der Ansprüche 1 bis 8, **dadurch gekennzeichnet,** daß das elektrische Gerät (ELG) als Vorrichtung zur Jalousien- und Markisensteuerung ausgebildet ist.

13. Fernsteuerungsanordnung nach einem der Ansprüche 1 bis 8, **dadurch gekennzeichnet,** daß das elektrische Gerät (ELG) als Gerät der Unterhaltungselektronik ausgebildet ist.

## Claims

1. Remote control system for electric apparatuses, having:
a) a first cordless mobile element (PT1, PT4) and a first cordless base station (FT1, FT3) of a first cordless telephone (SLT1, SLT3) and a remote control device (FSE) which is assigned to the electric apparatus (ELG) and to the cordless base station (FT1, FT3), the cordless mobile element (PT1, PT4) being connected to the cordless base station (FT1, FT3) by means of bidirectional radio telecommunication,
b) a first digital serial remote control interface (B-FSS) which is connected to the cordless base station (FT1, FT3) and to the remote control device (FSE) in order to control the electric apparatus (ELG) remotely,
c) control means (BOF) which the cordless mobile unit (PT1, PT4) has,
d) remote control messages which are initialized by the control means (BOF) and which logically open and close the remote control interface (B-FSS), with the result that, in the opened state, the remote control interface (B-FSS) outputs to the remote control device (FSE) remote control commands which are contained in the remote control message.

2. Remote control system for electric apparatuses, having:
a) a second cordless mobile element (PT2), a third cordless mobile element (PT3) and a second cordless base station (FT2) of a second cordless telephone (SLT2) and a remote control device (FSE) which is assigned to the electric apparatus (ELG) and to the third cordless mobile element (PT3), the second cordless mobile element (PT2) being connected to the third cordless mobile element (PT3) via the cordless base station (FT2) by means of bidirectional radio telecommunication,
b) a second remote control interface (M-FSS) which is connected to the third cordless mobile element (PT3) and to the remote control device (FSE) in order to control the electric apparatus (ELG) remotely,
c) control means (BOF) which the second cordless mobile element (PT2) has,
d) remote control messages which are initialized by the control means (BOF) and which logically open and close the remote control interface (M-FSS), with the result that, in the opened state, the remote control interface (M-FSS) outputs to the remote control device (FSE) remote control commands which are contained in the remote control device.

3. Remote control system according to Claim 1, characterized in that the remote control device (FSE) and the first cordless base station (FT3) form one functional unit in such a way that the remote control device (FSE) is integrated into the cordless base station (FT3) or the cordless base station (FT3) is integrated into the remote control device (FSE).

4. Remote control system according to one of Claims 1 to 3, characterized in that the first cordless telephone (SLT1) and/or the second cordless telephone (SLT2) is/are embodied as a DECT cordless telephone.

5. Remote control system according to one of Claims 1 to 4, characterized in that the remote control interface (B-FSS, M-FSS) is embodied as a V.24 interface.

6. Remote control system according to one of Claims 1 to 4, characterized in that the remote control interface (B-FSS, M-FSS) is embodied as an I²C bus.

7. Remote control system according to one of Claims 1 to 6, characterized in that the remote control interface (B-FSS, M-FSS) and the remote control device (FSE) are embodied in such a way that in response to a remote control message which represents the outputting of the remote control command it is possible to transmit an acknowledgement which can be displayed at the first cordless mobile element (PT1, PT4) or the first cordless base station (FT1, FT3) or the second cordless mobile element (PT2) or the second cordless base station (FT2).

8. Remote control system according to one of Claims 1 to 7, characterized in that the control means (BOF) are embodied as a control interface.

9. Remote control system according to one of Claims 1 to 8, characterized in that the electric apparatus (ELG) is embodied as a device for opening or closing a garage door.

10. Remote control system according to one of Claims 1 to 8, characterized in that the electric apparatus (ELG) is embodied as a device for controlling light.

11. Remote control system according to one of Claims 1 to 8, characterized in that the electric apparatus (ELG) is embodied as a device for controlling heating.

12. Remote control system according to one of Claims 1 to 8, characterized in that the electric apparatus (ELG) is embodied as a device for controlling venetian blinds and awnings.

13. Remote control system according to one of Claims 1 to 8, characterized in that the electric apparatus (ELG) is designed as an electronic entertainment apparatus.

## Revendications

1. Dispositif de télécommande pour appareils électriques avec:
a) un premier poste mobile sans cordon (PT1, PT4) et un premier poste de base sans cordon (FT1, FT3) d'un premier téléphone sans cordon (SLT1, SLT3), ainsi qu'un dispositif de télécommande (FSE) affecté à l'appareil électrique (ELG) et au poste de base sans cordon (FT1, FT3), le poste mobile sans cordon (PT1, PT4) étant relié au poste de base sans cordon (FT1, FT3) par télécommunication radio bidirectionnelle,
b) une première interface, numérique et sérielle, de télécommande (B-FSS), qui est reliée, pour la télécommande de l'appareil électrique (ELG), au poste de base sans cordon (FT1, FT3) et au dispositif de télécommande (FSE),
c) des moyens de commande (BOF), que comporte le poste mobile sans cordon (PT1, PT4),
d) des messages de télécommande initialisés par les moyens de commande (BOF), ces messages de télécommande ouvrant et fermant logiquement l'interface de télécommande (B-FSS) de telle sorte que l'interface de télécommande (B-FSS), dans son état ouvert, envoie au dispositif de télécommande (FSE) des instructions de télécommande contenues dans le message de télécommande.

2. Dispositif de télécommande pour appareils électriques avec:
a) un deuxième poste mobile sans cordon (PT2), un troisième poste mobile sans cordon (PT3) et un deuxième poste de base sans cordon (FT2) d'un deuxième téléphone sans cordon (SLT2), ainsi qu'un dispositif de télécommande (FSE) affecté à l'appareil électrique (ELG) et au troisième poste mobile sans cordon (PT3), le deuxième poste mobile sans cordon (PT2) étant relié, via le poste de base sans cordon (FT2), au troisième poste mobile sans cordon (PT3) par télécommunication radio bidirectionnelle,
b) une deuxième interface de télécommande (M-FSS), qui est reliée, pour la télécommande de l'appareil électrique (ELG), au troisième poste mobile sans cordon (PT3) et au dispositif de télécommande (FSE),
c) des moyens de commande (BOF), que comporte le deuxième poste mobile sans cordon (PT2),
d) des messages de télécommande initialisés par les moyens de commande (BOF), ces messages de télécommande ouvrant et fermant logiquement l'interface de télécommande (M-FSS) de telle sorte que l'interface de télécommande (M-FSS), dans son état ouvert, envoie au dispositif de télécommande (FSE) des instructions de télécommande contenues dans le message de télécommande.

3. Dispositif de télécommande selon la revendication 1 **caractérisé par le fait** que
le dispositif de télécommande (FSE) et le premier poste de base sans cordon (FT3) forment un unité fonctionnelle telle que le dispositif de télécommande (FSE) est intégré dans le poste de base sans cordon (FT3) ou le poste de base sans cordon (FT3) dans le dispositif de télécommande (FSE).

4. Dispositif de télécommande selon l'une des revendications 1 à 3 **caractérisé par le fait** que
le premier téléphone sans cordon (SLT1) et/ou le deuxième téléphone sans cordon (SLT2) sont conçus comme téléphones DECT sans cordon.

5. Dispositif de télécommande selon l'une des revendications 1 à 4 **caractérisé par le fait** que
l'interface de télécommande (B-FSS, M-FSS) est conçue en tant qu'interface V.24.

6. Dispositif de télécommande selon l'une des revendications 1 à 4 **caractérisé par le fait** que
l'interface de télécommande (B-FSS, M-FSS) est conçue en tant que bus I²C.

7. Dispositif de télécommande selon l'une des revendications 1 à 6 **caractérisé par le fait** que
l'interface de télécommande (B-FSS, M-FSS) et le dispositif de télécommande (FSE) sont conçus de telle sorte que, à la suite d'un message de télécommande représentant l'envoi de l'instruction de télécommande, un message de retour peut être transmis, qui est affichable sur le premier poste mobile sans cordon (PT1, PT4) ou sur le premier poste de base sans cordon (FT1, FT3) ou respectivement sur le deuxième poste mobile sans cordon (PT2) ou sur le deuxième poste de base sans cordon (FT2).

8. Dispositif de télécommande selon l'une des revendications 1 à 7 **caractérisé par le fait** que
les moyens de commande (BOF) sont conçus comme interface utilisateur.

9. Dispositif de télécommande selon l'une des revendications 1 à 8 **caractérisé par le fait** que
l'appareil électrique (ELG) est conçu comme appareillage pour ouvrir ou fermer une porte de garage.

10. Dispositif de télécommande selon l'une des revendications 1 à 8 **caractérisé par le fait** que
l'appareil électrique (ELG) est conçu comme appareillage pour commander un éclairage.

11. Dispositif de télécommande selon l'une des revendications 1 à 8 **caractérisé par le fait** que
l'appareil électrique (ELG) est conçu comme appareillage pour commander un chauffage.

12. Dispositif de télécommande selon l'une des revendications 1 à 8 **caractérisé par le fait** que
l'appareil électrique (ELG) est conçu comme appareillage pour commander des stores vénitiens et des stores en toile.

13. Dispositif de télécommande selon l'une des revendications 1 à 8 **caractérisé par le fait** que
l'appareil électrique (ELG) est conçu comme appareil électronique de divertissement.
